# EUROPEAN PATENT SPECIFICATION

(11) **EP 4 381 195 B1**
(45) Date of publication and mention of the grant of the patent: **11.06.2025**
(21) Application number: 21755437.7
(22) Date of filing: 03.08.2021
(51) Int. Cl.: F01P 11/02, F04D 9/00, F04D 13/06, F04D 13/14

(54) **AUTOMOTIVE COOLANT LIQUID DEAERATOR UNIT**
ENTLÜFTUNGSEINHEIT FÜR KÜHLFLÜSSIGKEIT EINES KRAFTFAHRZEUGES
ENSEMBLE DÉSAÉRATEUR DE LIQUIDE DE REFROIDISSEMENT D'AUTOMOBILE

(43) Date of publication of application: 12.06.2024
(73) Proprietor: Pierburg Pump Technology GmbH, 41460 Neuss (DE)
(72) Inventor: FORD, Gabriella, Fountain Inn, South Carolina 29644 (US); FIORINI, Stefano, Fountain Inn, South Carolina 29644 (US); PERONI, Giorgio, 57123 Livorno (IT); WOLTZ, Brandon, Fountain Inn, South Carolina 29644 (US); TROMBLEY, Eric, Fountain Inn, South Carolina 29644 (US)
(74) Representative: terpatent PartGmbB
(86) International application number: PCT/EP2021/071665
(87) International publication number: WO 2023/011707

(56) References cited:
- DE-A1- 3 813 654
- FR-A1- 2 905 737
- US-A1- 2013 020 057
- US-A1- 2020 009 939

## Description

The invention refers to a passive automobile coolant liquid deaerator unit for deaerating a circulating coolant liquid of a coolant circuit of an automobile.

Typical coolant liquid circuits in automotive applications are engine coolant circuits for an electrical traction engine or for an internal combustion traction engine, or can be traction battery coolant circuits or coolant circuits for secondary devices as, for example, for turbochargers, for exhaust gas valves etc. An automotive coolant liquid circuit typically comprises a mechanical or an electric coolant liquid pump circulating the coolant liquid in the coolant circuit. The typical coolant liquid pump type is a flow pump.

The cooling capacity of the coolant liquid and the pumping rate of a flow pump are substantially deteriorated by gas/air bubbles carried with the coolant liquid current. In the state-of-the-art, an expansion tank is provided at the vertically highest point of the coolant circuit so that the air bubbles can rise up to the expansion tank. However, when the coolant liquid pump is active and the coolant liquid is circulated in the coolant circuit, the air bubbles are carried with the circulating coolant liquid current so that the air bubbles could substantially remain within the circulating coolant liquid current and do not rise to the expansion tank. This effect is stronger and worse the higher the flow velocity of the coolant liquid in the coolant liquid circuit is.

DE 10 2010 008 656 A1 discloses an air bubble separator being provided in-line with a usual coolant liquid tube of the circuit. The air separation means causes turbulences in the relatively fast-flowing coolant liquid current so that the air bubble separator is not very effective.

FR 2 905 737 discloses a passive automotive coolant liquid deaerator unit with a cylindrical housing and a horizontal baffle plate being vertically arranged between a liquid inlet and a liquid outlet.

It is an object of the invention to provide an effective passive automotive coolant liquid deaerator means.

This object is achieved with a passive automotive coolant liquid deaerator unit with the features of claim 1.

The passive automotive coolant liquid deaerator unit according to the invention is provided with a deaerator housing defining a widened deceleration chamber with a chamber liquid inlet and a chamber liquid outlet for the coolant liquid which preferably is water. The deaerator housing is provided with a deaeration opening at the vertical top of the deceleration chamber.

The fluidic cross-section of the deceleration chamber is enlarged between the chamber liquid inlet and the chamber liquid outlet so that the flow velocity of the coolant liquid current within the deceleration chamber is substantially reduced.

The deaeration opening can be fluidically connected to the atmosphere or to an expansion tank. A semipermeable membrane can be provided between the deaeration opening and the atmosphere or the expansion tank, the semipermeable membrane being not permeable for the coolant liquid but permeable for air.

The coolant liquid flow velocity reduction in the deceleration chamber has the effect that the pressure of the coolant liquid and of the gas bubbles within the deceleration chamber is reduced so that the gas bubbles expand and become lighter in specific weight so that the hydrostatic uplift force of the air bubbles is increased.

The chamber liquid inlet and the chamber liquid outlet both are provided below the deaeration opening, whereas the chamber liquid inlet is provided vertically higher than the chamber liquid outlet. In other words, the liquid within the deceleration chamber has a slight downward flow component between the chamber liquid inlet and the chamber liquid outlet. A substantially horizontal baffle plate is arranged within the deceleration chamber and is arranged vertically between the chamber liquid inlet and the chamber liquid outlet. 'Substantially horizontal' in the present context means that the baffle plate is substantially plane and is tilted in relation to a horizontal plane by less than 15° or is perfectly lying in a horizontal plane.

The coolant liquid entering the deceleration chamber flows around the substantially horizontal baffle plate to finally leave the deceleration chamber through the chamber liquid outlet. The baffle plate hinders the coolant liquid to flow from the chamber liquid inlet to the chamber liquid outlet in a straight direct line but forces the coolant liquid to pass the baffle plate at the baffle plates circumferential edge. The baffle plate edge defines together with the deceleration chamber sidewalls a ring-like bypass opening or several bypass openings through which the coolant liquid flows to the chamber liquid outlet. The local flow velocity of the coolant liquid right at the upside surface of the baffle plate is substantially reduced because of frictional effects so that the gas/air bubbles have more time to rise up to the deaeration opening. Preferably, the baffle plate is substantially fully surfaced, and itself is not provided with any kind of additional perforations or openings.

Experiments and tests have shown that the separation rate of the deaerator unit with the baffle plate arranged fluidically between the chamber liquid inlet and the chamber liquid outlet increases the separation rate by more than 10% compared to the same deceleration chamber without any baffle plate.

The deaerator housing is defined by a main housing body and a cover lid body. The main housing body and the cover lid body preferably both are made from a suitable plastic material and can be assembled and hold together by screws, clips, gluing, welding etc. The deaerator main housing body defines a horizontal chamber bottom wall and all chamber side walls. The cover lid body defines the chamber top wall and directly holds the baffle plate body. The cover lid body can be provided with one or more substantially vertical holding arm(s) which hold the baffle plate in a defined vertical distance of with respect to the chamber top wall. The cover lid body is preferably made from plastic and is a single body integrating the cover lid body, the holding arm, and the baffle plate body in one piece, and also defines the deaeration opening at the chamber top wall.

Generally, the invention as defined in claim 1 can also be used in non-automotive applications, for example, in a static electronics cooling circuit.

Preferably, the lowest edge of the opening of the chamber liquid inlet is vertically higher than the highest edge of the opening of the chamber liquid outlet. The plane baffle plate is lying in a horizontal plane without any substantial inclination with respect to the horizontal plane and is horizontally positioned between the lowest edge of the chamber liquid inlet opening and the highest edge of the chamber liquid outlet opening.

Preferably, the baffle plate blocks at least 50%, and more preferably blocks at least 65% of the horizontal cross-section of the deceleration chamber in the plane defined by the baffle plate. Preferably the baffle plate blocks less than 95%, more preferably less than 90% of the horizontal cross-section of the deceleration chamber in the plane defined by the baffle plate. The baffle plate therefore does not substantially affect the total flow resistance of the deaerator unit but has a substantial positive effect on the separation rate of the deaerator unit.

Preferably, the contour of the baffle plate body is geometrically substantially similar with the contour of the bottom wall of the deceleration chamber so that the vertical side walls of the deceleration chamber and the contour of the circumferential edge of the baffle plate body define a ring-like bypass opening with a constant opening width over of the ring-like bypass opening circumference, preferably over the complete circumference.

Preferably, the deceleration chamber has a cross-section widening zone with a continuous increase of the horizontal width from an initial width to an end width, which increase preferably is a linear increase. Since the coolant liquid flow velocity is reduced significantly, a relatively short deceleration chamber, seen in flow direction, is sufficient to give the gas bubbles enough time to rise up to the surface of the coolant liquid within the deceleration chamber. Since the fluidic cross-section of the deceleration chamber is continuously increasing, but is not only stepwisely increasing, massive turbulences within the deceleration chamber are avoided so that the rise of the air bubbles to the coolant liquid surface is not disturbed.

At least 50% of the total cross-sectional increase between the chamber liquid inlet and the chamber liquid outlet is provided by the continuously cross-sectional increasing section of the deceleration chamber. It is not necessary to avoid any kind of a stepwise cross-sectional increase, but the non-continuous share should be as small as possible, and preferably should be below 25% of the total cross-sectional increase between the chamber liquid inlet and the chamber liquid outlet.

The coolant liquid deaerator unit with the, at least in part, continuously cross-sectional increasing deceleration chamber provides a very effective degassing or deaeration of the coolant liquid current with separation rates of substantially more than 35%, and even higher, over the complete spectrum of possible general coolant flow rates in the coolant liquid circuit.

The continuous increase share is more than 50% of the total cross-sectional increase of the complete deceleration chamber, and is realized by an increasing horizontal width of the deceleration chamber, but not by a declining bottom wall of the deceleration chamber.

Preferably, the bottom wall between the chamber liquid inlet and the chamber liquid outlet of the deceleration chamber is lying substantially in a horizontal plane. Since the deceleration chamber bottom wall is, seen in flow direction, not substantially declining, the liquid current flow within the deceleration chamber has no substantial downward component which could cause the gas bubbles to have a downward flow direction component as well which would hinder the gas bubbles to rise to the coolant liquid surface.

Preferably, the cross section widening zone begins right after the chamber liquid inlet, whereas a constant cross-section zone could be provided downstream of the cross-section widening zone. Since the cross-section widening zone could cause some liquid turbulences, the coolant liquid current is calmed after the cross-section widening zone so that the rise of the gas bubbles is improved substantially.

Preferably, the coolant liquid deaerator unit is a twin deaerator, and the deaerator housing defines a second deceleration chamber. The second widened deceleration chamber is substantially separated from the first deceleration chamber so that the two different coolant liquid flows flowing through the two deceleration chambers are substantially separated from each other and do not substantially mix with each other. The deaerator unit according to this aspect of the invention therefore integrates two deaerator means for two separate cooling liquid circuits.

Preferably, the deaerator housing is provided with a separation wall directly separating the first deceleration chamber from the second deceleration chamber. However, the separation wall does not necessarily completely fluidically separate the two deceleration chambers but separates the lower liquid-containing parts of both deceleration chambers from each other so that the liquids of both cooling liquid circuits are not mixed. The separation wall defines a chamber side wall of the corresponding deceleration chambers, respectively.

Preferably the deaerator unit is provided with a single gas outlet opening for both deceleration chambers so that the twin deaerator has only one single gas outlet opening.

Preferably, the housing main body of the deaerator housing defines an axial liquid pump inlet opening axially aligned with the center of a flow pump wheel of a mechanical or an electrical coolant liquid pump. The axial liquid pump inlet opening is axially adjacent to the flow pump wheel. Even more preferably, the flow pump wheel is an impeller wheel, and the deaerator housing main body defines an outlet ring channel, preferably a volute-like ring channel, radially surrounding the flow pump wheel. The deaerator housing main body is preferably a plastic body defining in one integral piece at least four or five side walls of the deceleration chamber and also substantially defining the pumps outlet ring channel so that a separate (plastic) piece for defining the outlet ring channel can be avoided.

Preferably, the largest cross-section within the deceleration chamber seen in the general flow direction is at least 80% larger, more preferably more than 120% larger, than the cross section of the liquid inlet opening.

Preferably, the deaerator housing defining the deceleration chamber, the deaerator liquid inlet opening and the deaerator liquid outlet opening, is mechanically directly and stiffly connected to the liquid pump unit, and in particular is directly connected to a housing part of the liquid pump unit.

In other words, the flow pump unit and the passive deaerator unit are combined in one single integrated deaerator-pump-module. The fluidic properties of the flow pump unit and of the deaerator unit can be perfectly harmonized because the pump unit and the deaerator unit are fluidically directly connected to each other. Compared to a deaerator unit provided separately and remote from the pump unit, a separate connection tube and connection means to connect the two units are avoided so that the number of fluidic interfaces of the coolant liquid circuit is reduced.

Preferably, the deaerator unit is positioned fluidically upstream of the electric flow pump unit so that a relatively air-bubble-free coolant liquid current enters the flow pump unit so that the fluidic efficiency of the flow pump unit is not deteriorated and the flow pump unit always works efficiently.

One embodiment of the invention is described with reference to the enclosed drawings, wherein
figure 1 shows a combined top view and a horizontal longitudinal section I-I of an integrated automotive electric liquid pump module comprising a twin coolant liquid deaerator unit according to the invention,
figure 2 shows a combined side view and a vertical longitudinal section II-II of the pump module including the twin coolant liquid deaerator unit of figure 1,

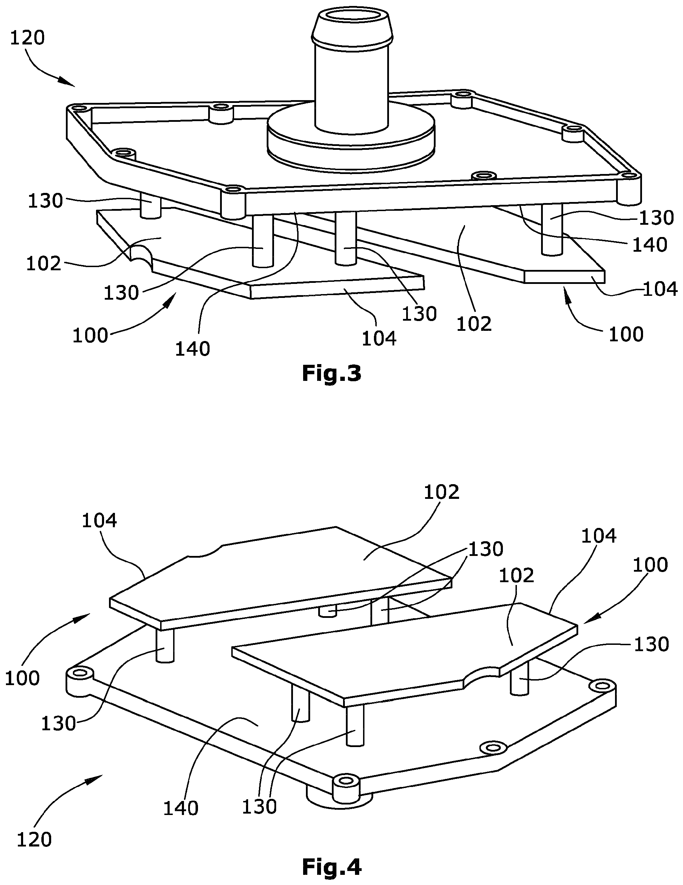

figure 3 a perspective view on a cover lid body of the deaerator housing of the deaerator unit of figures 1 and two, and
figure 4 another perspective view of the cover lid body of figure 3.

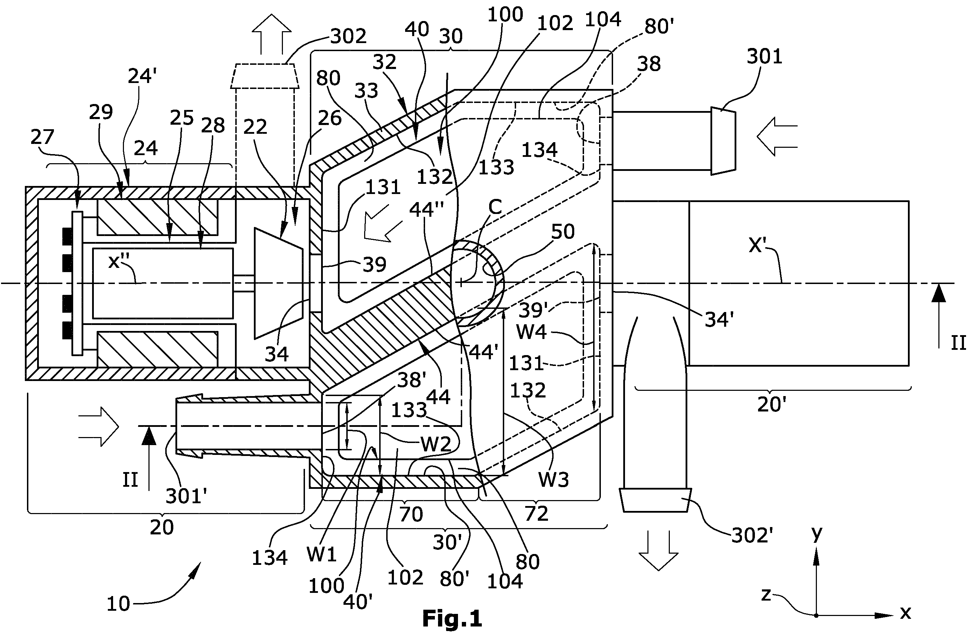

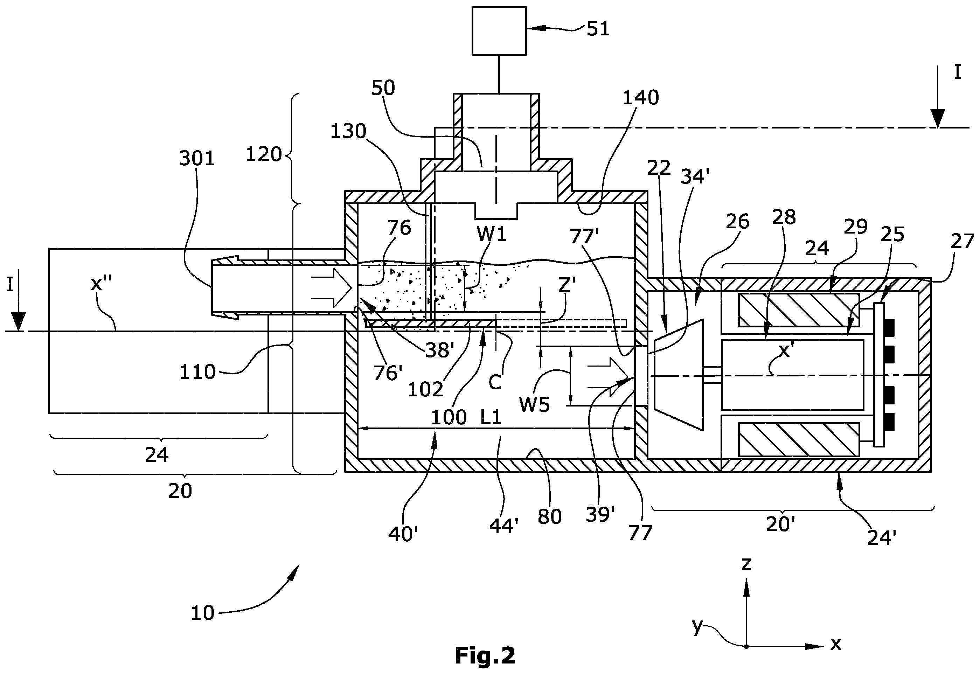

Figures 1 and 2 show an automotive electric liquid pump module 10 integrating two combined deaerator/pump combinations. The pump module 10 is used in an automotive application which means that low weight, very low production costs, high reliability, high vibration durability and compactness are general requirements for the pump module 10. The pump module 10 is a twin module integrating two combined flow pump unit/deaerator unit combinations in one single pump module 10. The pump module 10 can circulate a coolant liquid in two different coolant circuits, for example an automotive traction engine cooling circuit and a traction battery cooling circuit.

Figure 1 shows a top view of two different horizontal planes XY and figure 2 shows a side view of different vertical planes XZ of the pump module 10. The pump module 10 comprises a first electrical flow pump unit 20, a fluidically related first passive deaerator unit 30, a second electrical flow pump unit 20' and a fluidically related second passive deaerator unit 30'. From a structural point of view, the first deaerator unit 30 and the second deaerator unit 30' are defined by one single plastic deaerator housing 32 made of a suitable plastic deaerator housing main body 33 and a suitable cover body, so that the pump module 10 is substantially an assembly of two separate electrical flow pump units 20, 20' and the complete deaerator housing 32.

The two separate electrical flow pump units 20, 20' both have an identical structure, but alternatively can generally be different in their electric and hydraulic performance. In this embodiment, the electrical flow pump units 20, 20' both are provided with an electric can motor 24 with a separation can 25 separating a wet motor section from a dry motor section. The motor electronics 27 and an electromagnetic motor stator 29 are provided in the dry section, whereas a permanently magnetized motor rotor 28 and a flow pump wheel 22 are provided in the wet section. The motor rotor 28 directly and coaxially drives the flow pump rotor 22 which is provided as an impeller with an axial pump wheel inlet and a radial pump wheel outlet.

The deaerator housing 32 defines a first widened deceleration chamber 40 and a second identical deceleration chamber 40'. However, the two deceleration chambers 40, 40' do not necessarily need to be identical if the two connected cooling circuits and their cooling performance are not equal.

The cross section area of the deceleration chambers 40, 40' is dramatically widening after the corresponding chamber liquid inlet 38, 38' by more than 200% in relation to the cross section area of the opening of the corresponding chamber liquid inlet 38, 38' so that the liquid entering the deceleration chamber 40, 40' is dramatically decelerated and flows relatively slowly from the chamber liquid inlet 38, 38' to the corresponding chamber liquid outlet 39, 39'.

As shown in figure 1 the deceleration chamber 40, 40' has, right after the opening 76 of the chamber liquid inlet 38, 38', a cross section widening zone 70 with an initial horizontal width W2 which is linearly increasing to an end width W3. Downstream of and directly following to the cross-section widening zone 70 is a constant cross-section zone 72 with a constant horizontal width W3,W4. The opening 76 of the chamber liquid inlet 38, 38' has a chamber liquid opening width W1 which is a diameter and which is about 60% of the initial horizontal width W2. The horizontal end width is about 200% of the initial horizontal width W2.

As can be seen in figure 2, the bottom wall 80 of the deceleration chambers 40, 40' is completely plane and is lying in a horizontal plane XY. The chamber liquid inlet 38, 38' is located vertically higher than the corresponding chamber liquid outlet 39, 39'. The lowest edge 76' of the chamber liquid inlet opening 76 is provided vertically higher with a vertical offset Z' than the highest edge 77' of the chamber liquid outlet opening 77.

Therefore, the gas/air bubbles entering the deceleration chamber 40, 40' together with the coolant liquid have much time to rise to the top region of the deceleration chamber 40, 40', as shown in figure 2. The two deceleration chambers 40, 40' are substantially separated from each other by a separation wall 44 so that the coolant liquids of the two deceleration chambers and do not mix with each other.

Both deaerator units 30, 30' together have one single common deaeration opening 50 at the vertical top of the two deceleration chambers 40, 40' so that the deceleration chambers 40, 40' are fluidically connected with each other and have the same fluid pressures. Alternatively, each deaerator unit 30, 30' can have its own deaeration opening to fluidically completely separate both cooling circuits from each other. The deaeration opening 50 is fluidically connected to a compensation tank 51.

As shown in figure 2, the deaerator housing 32 is defined by a main housing body 110 and a cover lid body 120, both being made of a suitable plastic material. The cover lid body 120 is assembled to the main housing body 110 by welding or gluing so that a fluid-tight connection of the two bodies 110, 120 is realized. The cover lid body 120 defines a horizontal chamber top wall 140 for both deaerator units 30, 30' and holds two horizontal baffle plates 100 at vertical holding arms 130, each baffle plate 100 defined by a horizontal baffle plate body 102. The main housing body 110 defines a horizontal chamber bottom wall 80 and the five chamber side walls 44', 44", 131, 132, 133, 134 of both deaerator units 30, 30', respectively. The baffle plate 100 is arranged within the corresponding deceleration chamber 40, 40' vertically between the lowest edge 76' of the chamber liquid inlet opening 76 and the highest edge 77' of the chamber liquid outlet opening 77, respectively. The proximal chamber side walls 44', 44" of the two deceleration chambers 40, 40' are defined by the body of the separation wall 44.

As shown in figure 1, the contour 104 of the baffle plate body 102 is geometrically substantially similar with the contour 80' of the bottom wall 80 of the deceleration chamber 40, 40' but is smaller than the corresponding bottom wall contour 80' so that a five-sided ring-like bypass opening between the baffle plate 100 and the five chamber side walls 44, 44', 131, 132, 133, 134 is defined.

The since the twin deaerator unit 30, 30' is positioned fluidically upstream of the corresponding electric flow pump unit 20, 20', the deaerator unit chamber liquid outlet 39, 39' defines the axial liquid pump inlet opening 34, 34', respectively, so that a deaerated liquid current axially enters the corresponding pump unit 20, 20'. As can be seen in both figures, the deaerator housing main body 33 substantially defines the outer circumference wall of the outlet ring channel 26 radially surrounding the corresponding flow pump wheel 22, and also defines the corresponding tangential pump outlet duct with the corresponding pump outlet opening 302, 302'. Additionally, the deaerator housing main body 33 defines both inlet ducts 301, 301' respectively leading to the deaerator unit liquid inlets 38, 38'. The deaerator housing main body 33 is directly connected to the motor housing 24'.

As shown in both figures, the rotational axis' X", X' of both flow pump units 20, 20' are provided perfectly coaxially with each other. Additionally, the rotational axis' X", X' of both flow pump units 20, 20' perfectly intersect with the center of gravity C of the complete liquid pump module 10.

## Claims

1. A passive automotive coolant liquid deaerator unit (30, 30') for deaerating a circulating coolant liquid of a coolant circuit of an automobile, with
a deaerator housing (32) defining a deceleration chamber (40, 40') with a chamber liquid inlet (38, 38') and a chamber liquid outlet (39, 39') and being provided with a deaeration opening (50) at the vertical top of the deceleration chamber (40, 40'),
wherein the chamber liquid inlet (38, 38') is provided vertically higher than the chamber liquid outlet (39, 39'),
wherein a substantially horizontal baffle plate (100) is arranged within the deceleration chamber (40, 40') and is arranged vertically between the chamber liquid inlet (38, 38') and the chamber liquid outlet (39, 39'), and
**characterised in that** the deaerator housing (32) is defined by a main housing body (110) with a horizontal chamber bottom wall (80) and chamber sidewalls (44',131,132,133,134) and a cover lid body (120) with a chamber top wall (140), whereas the baffle plate body (102) is held by the cover lid body (120).

2. The passive automotive coolant liquid deaerator unit (30, 30') of claim 1, wherein the lowest edge (76') of the opening (76) of the chamber liquid inlet (38, 38') is vertically higher than the highest edge (77') of the opening (77) of the chamber liquid outlet (38, 38'), whereas the baffle plate (100) is horizontally positioned between the lowest edge (76') of the chamber liquid inlet opening (76) and the highest edge (77') of the chamber liquid outlet opening (77) and is lying in a horizontal plane (XY).

3. The passive automotive coolant liquid deaerator unit (30, 30') of one of the preceding claims, wherein the baffle plate (100) blocks at least 50%, preferably at least 65% of the horizontal cross-section of the deceleration chamber (40, 40').

4. The passive automotive coolant liquid deaerator unit (30, 30') of one of the preceding claims, wherein the contour (104) of the body (102) of the baffle plate (100) is geometrically similar with the contour (80') of the bottom wall (80) of the deceleration chamber (40, 40').

5. The passive automotive coolant liquid deaerator unit (30, 30') of one of the preceding claims, wherein the deceleration chamber (40, 40') has a cross-section widening zone (70) with a continuous increase of the horizontal width from an initial width (W2) to an end width (W3), preferably a linear increase.

6. The passive automotive coolant liquid deaerator unit (30, 30') of claim 5, wherein the cross-section widening zone (70) begins right after the chamber liquid inlet (38, 38').

7. The passive automotive coolant liquid deaerator unit (30, 30') of one of the preceding claims, wherein the deaerator housing (32) defines a widened second deceleration chamber (40') being substantially separated from the first deceleration chamber (40) and provided with the features as claimed in the preceding claims.

8. The passive automotive coolant liquid deaerator unit (30, 30') of claim 7, wherein the deaerator housing (32) is provided with a separation wall (44) directly separating the first deceleration chamber (40) from the second deceleration chamber (40') and defining a chamber side wall (44',44") of the corresponding deceleration chambers (40, 40'), respectively.

9. The passive automotive coolant liquid deaerator unit (30, 30') of claim 7 or 8, wherein one single gas outlet opening (50) is provided for both deceleration chambers (40, 40').

## Patentansprüche

1. Eine passive Kraftfahrzeug-Kühlmittelflüssigkeits-Entlüftungseinheit (30, 30') zum Entlüften einer zirkulierenden Kühlmittelflüssigkeit eines Kühlmittelkreislaufs eines Kraftfahrzeugs, mit
einem Entlüftungsgehäuse (32), das eine Verzögerungskammer (40, 40') mit einem Kammerflüssigkeitseinlass (38, 38') und einem Kammerflüssigkeitsauslass (39, 39') definiert und mit einer Entlüftungsöffnung (50) an der vertikalen Oberseite der Verzögerungskammer (40, 40') versehen ist,
wobei der Kammerflüssigkeitseinlass (38, 38') vertikal höher als der Kammerflüssigkeitsauslass (39, 39') vorgesehen ist,
eine im Wesentlichen horizontale Prallplatte (100) innerhalb der Verzögerungskammer (40, 40') angeordnet ist und vertikal zwischen dem Kammerflüssigkeitseinlass (38, 38') und dem Kammerflüssigkeitsauslass (39, 39') angeordnet ist, und
**dadurch gekennzeichnet, dass**
das Entlüftungsgehäuse (32) durch einen Hauptgehäusekörper (110) mit einer horizontalen Kammerbodenwand (80) und Kammerseitenwänden (44', 131, 132, 133, 134) und einen Abdeckkappenkörper (120) mit einer Kammeroberwand (140) definiert ist, wobei der Prallplattenkörper (102) durch den Abdeckkappenkörper (120) gehalten wird.

2. Die passive Kraftfahrzeug-Kühlmittelflüssigkeits-Entlüftungseinheit (30, 30') gemäß Anspruch 1, wobei die unterste Kante (76') der Öffnung (76) des Kammerflüssigkeitseinlasses (38, 38') vertikal höher als die höchste Kante (77') der Öffnung (77) des Kammerflüssigkeitsauslasses (38, 38') ist, wobei die Prallplatte (100) horizontal zwischen der untersten Kante (76') der Kammerflüssigkeitseinlassöffnung (76) und der höchsten Kante (77') der Kammerflüssigkeitsauslassöffnung (77) positioniert ist und in einer horizontalen Ebene (XY) liegt.

3. Die passive Kraftfahrzeug-Kühlmittelflüssigkeits-Entlüftungseinheit (30, 30') gemäß einem der vorhergehenden Ansprüche, wobei die Prallplatte (100) mindestens 50 %, vorzugsweise mindestens 65 % des horizontalen Querschnitts der Verzögerungskammer (40, 40') blockiert.

4. Die passive Kraftfahrzeug-Kühlmittelflüssigkeits-Entlüftungseinheit (30, 30') gemäß einem der vorhergehenden Ansprüche, wobei die Kontur (104) des Körpers (102) der Prallplatte (100) geometrisch ähnlich zu der Kontur (80') der Bodenwand (80) der Verzögerungskammer (40, 40') ist.

5. Die passive Kraftfahrzeug-Kühlmittelflüssigkeits-Entlüftungseinheit (30, 30') gemäß einem der vorhergehenden Ansprüche, wobei die Verzögerungskammer (40, 40') eine Querschnittserweiterungszone (70) mit einer kontinuierlichen Zunahme der horizontalen Breite von einer Anfangsbreite (W2) zu einer Endbreite (W3), vorzugsweise mit einer linearen Zunahme, aufweist.

6. Die passive Kraftfahrzeug-Kühlmittelflüssigkeits-Entlüftungseinheit (30, 30') gemäß Anspruch 5, wobei die Querschnittserweiterungszone (70) unmittelbar nach dem Kammerflüssigkeitseinlass (38, 38') beginnt.

7. Die passive Kraftfahrzeug-Kühlmittelflüssigkeits-Entlüftungseinheit (30, 30') gemäß einem der vorhergehenden Ansprüche, wobei das Entlüftungsgehäuse (32) eine erweiterte zweite Verzögerungskammer (40') definiert, die im Wesentlichen von der ersten Verzögerungskammer (40) getrennt ist und mit den Merkmalen gemäß den vorhergehenden Ansprüchen versehen ist.

8. Die passive Kraftfahrzeug-Kühlmittelflüssigkeits-Entlüftungseinheit (30, 30') gemäß Anspruch 7, wobei das Entlüftungsgehäuse (32) mit einer Trennwand (44) versehen ist, die die erste Verzögerungskammer (40) direkt von der zweiten Verzögerungskammer (40') trennt und eine Kammerseitenwand (44', 44") der entsprechenden Verzögerungskammern (40, 40') definiert.

9. Die passive Kraftfahrzeug-Kühlmittelflüssigkeits-Entlüftungseinheit (30, 30') gemäß Anspruch 7 oder 8, wobei eine einzige Gasauslassöffnung (50) für beide Verzögerungskammern (40, 40') vorgesehen ist.

## Revendications

1. Une unité passive de désaération de liquide de refroidissement d'automobile (30, 30') pour désaérer un liquide de refroidissement en circulation d'un circuit de refroidissement d'une automobile, avec
un boîtier de désaération (32) définissant une chambre de décélération (40, 40') avec une entrée de liquide de chambre (38, 38') et une sortie de liquide de chambre (39, 39') et étant pourvu d'une ouverture de désaération (50) au sommet vertical de la chambre de décélération (40, 40'),
dans laquelle l'entrée de liquide de chambre (38, 38') est prévue verticalement plus haut que la sortie de liquide de chambre (39, 39'),
dans laquelle une plaque de chicane sensiblement horizontale (100) est agencée à l'intérieur de la chambre de décélération (40, 40') et est agencée verticalement entre l'entrée de liquide de chambre (38, 38') et la sortie de liquide de chambre (39, 39'), et
**caractérisé en ce que**
le boîtier de désaération (32) est défini par un corps de boîtier principal (110) avec une paroi inférieure de chambre horizontale (80) et des parois latérales de chambre (44', 131, 132, 133, 134) et un corps de couvercle de couvercle (120) avec une paroi supérieure de chambre (140), tandis que le corps de plaque de chicane (102) est maintenu par le corps de couvercle de couvercle (120).

2. L'unité passive de désaération de liquide de refroidissement d'automobile (30, 30') selon la revendication 1, dans laquelle le bord le plus bas (76') de l'ouverture (76) de l'entrée de liquide de chambre (38, 38') est verticalement plus haut que le bord le plus haut (77') de l'ouverture (77) de la sortie de liquide de chambre (38, 38'), tandis que la plaque de chicane (100) est positionnée horizontalement entre le bord le plus bas (76') de l'ouverture d'entrée de liquide de chambre (76) et le bord le plus haut (77') de l'ouverture de sortie de liquide de chambre (77) et est située dans un plan horizontal (XY).

3. L'unité passive de désaération de liquide de refroidissement d'automobile (30, 30') selon l'une des revendications précédentes, dans laquelle la plaque de chicane (100) bloque au moins 50 %, de préférence au moins 65 % de la section transversale horizontale de la chambre de décélération (40, 40').

4. L'unité passive de désaération de liquide de refroidissement d'automobile (30, 30') selon l'une des revendications précédentes, dans laquelle le contour (104) du corps (102) de la plaque de chicane (100) est géométriquement similaire au contour (80') de la paroi inférieure (80) de la chambre de décélération (40, 40').

5. L'unité passive de désaération de liquide de refroidissement d'automobile (30, 30') selon l'une des revendications précédentes, dans laquelle la chambre de décélération (40, 40') a une zone d'élargissement de section transversale (70) avec une augmentation continue de la largeur horizontale d'une largeur initiale (W2) à une largeur finale (W3), de préférence une augmentation linéaire.

6. L'unité passive de désaération de liquide de refroidissement d'automobile (30, 30') selon la revendication 5, dans laquelle la zone d'élargissement de section transversale (70) commence juste après l'entrée de liquide de chambre (38, 38').

7. L'unité passive de désaération de liquide de refroidissement d'automobile (30, 30') selon l'une des revendications précédentes, dans laquelle le boîtier de désaération (32) définit une deuxième chambre de décélération élargie (40') étant sensiblement séparée de la première chambre de décélération (40) et pourvue des caractéristiques telles que revendiquées dans les revendications précédentes.

8. L'unité passive de désaération de liquide de refroidissement d'automobile (30, 30') selon la revendication 7, dans laquelle le boîtier de désaération (32) est pourvu d'une paroi de séparation (44) séparant directement la première chambre de décélération (40) de la deuxième chambre de décélération (40') et définissant une paroi latérale de chambre (44', 44") des chambres de décélération correspondantes (40, 40'), respectivement.

9. L'unité passive de désaération de liquide de refroidissement d'automobile (30, 30') selon la revendication 7 ou 8, dans laquelle une seule ouverture de sortie de gaz (50) est prévue pour les deux chambres de décélération (40, 40').
